**Europäisches Patentamt**

**European Patent Office**

**Office européen des brevets**

(11) Veröffentlichungsnummer : **0 355 332 B1**

(12) # EUROPÄISCHE PATENTSCHRIFT

(45) Veröffentlichungstag der Patentschrift :
**12.02.92 Patentblatt 92/07**

(51) Int. Cl.$^5$ : **B23B 5/44**

(21) Anmeldenummer : **89112016.4**

(22) Anmeldetag : **01.07.89**

(54) zusatzgerät für Werkzeugmaschinen.

(30) Priorität : **17.08.88 DE 3827889**

(43) Veröffentlichungstag der Anmeldung :
**28.02.90 Patentblatt 90/09**

(45) Bekanntmachung des Hinweises auf die
Patenterteilung :
**12.02.92 Patentblatt 92/07**

(84) Benannte Vertragsstaaten :
**AT BE CH DE ES FR GB IT LI NL SE**

(56) Entgegenhaltungen :
**DE-A- 1 752 531**
**DE-A- 2 553 216**
**DE-C- 58 174**

(73) Patentinhaber : **ANDREAS WITTE KG**
**Horndorfer Weg 28**
**W-2122 Bleckede/OT Barskamp (DE)**

(72) Erfinder : **Witte, Andreas**
**Hohe Luft 6**
**W-2122 Bleckede/OT Barskamp (DE)**

(74) Vertreter : **von Raffay, Vincenz, Dipl.-Ing. et al**
**Patentanwälte Raffay & Fleck Postfach 32 32**
**17**
**W-2000 Hamburg 13 (DE)**

## Beschreibung

Die Erfindung betrifft ein Zusatzgerät für Werkzeugmaschinen, wie Dreh- und Fräsmaschinen oder dergleichen, zum Herstellen von Mehrkantflächen an Werkstücken. Diese Mehrkantflächen können regelmäßig oder unregelmäßig sein.

Mehrspindelautomaten zum Mehrkantdrehen sind in den unterschiedlichsten Ausführungsformen bekannt Siehe z.B. DE-A-1 752 531 und DE-C-58 174. Hierbei handelt es sich immer um aufwendige und damit teure Spezialmaschinen für das Mehrkantdrehen, d.h. zur Herstellung von 4-, 6- oder 8-Kantwerkstücken. Zu derartigen Mehrkantwerkstücken gehören auch solche mit Plannuten und Kronenköpfe. Das Prinzip und die geometrischen Grundlagen, durch die eine fast ebene (nur geringfügig ballige) Fläche an einem mehrkantigen Werkstück bei entsprechender Rotation des Werkstückes und des Werkzeuges erzeugt werden kann, sind beispielsweise in dem Aufsatz "Mehrkantdrehen auf Mehrspindelautomaten" von Günter Blinda in "Werkstatt und Betrieb" 95. Jahrgang, 1962, Heft 7, beschrieben. Es wird daher an dieser Stelle auf eine Beschreibung der geometrischen Verhältnisse bei der Herstellung derartiger Mehrkantstücke verzichtet.

Sämtliche bekannten Maschinen sind aber relativ aufwendig und, wie gesagt, nicht zum universellen Einsatz als Werkzeugmaschine geeignet, sondern zu dem Zweck der Herstellung bestimmter mehrkantiger Werkstücke ausgelegt.

Je nach der Anzahl der verwendeten Schneiden des Werkstückes entsteht bei einem bestimmten Übersetzungsverhältnis eine entsprechende unterschiedliche Anzahl von Kanten. Bei einem Übersetzungsverhältnis von 1 : 2 entsteht bei einer Schneide ein Zweikant, bei zwei Schneiden ein Vierkant, bei drei Schneiden ein Sechskant usw..

Der Erfindung liegt nun die Aufgabe zugrunde, ein Zusatzgerät der eingangs genannten Art zu schaffen, mit dessen Hilfe eine herkömmliche Werkzeugmaschine, insbesondere eine Dreh- oder Fräsmaschine einfach zur Herstellung der genannten Mehrkantwerkstücke umgerüstet werden kann.

Diese Aufgabe wird grundsätzlich durch folgende Merkmale gelöst:

a) ein an der Spindel (1) der Werkzeugmaschine form- und kraftschlüssig drehantreibbar befestigbarer Messerkopf (2) mit einer oder mehreren in gleichen Teilungsabständen angeordneten Schneiden (3),

b) ein an dem Messerkopf (2) form- und kraftschlüssig drehantreibbar befestigbare, längenveränderbare Gelenkwelle (11),

c) einen auf dem Maschinentisch oder dergleichen befestigbarer Werkstückträger (5) mit parallel zur Spindelachse (17) verlaufender Drehachse (16), der mit dem freien Ende der Gelenkwelle (11) über ein schlupffreies, gleichsinniges und ein bestimmtes Übersetzungsverhältnis aufweisendes Getriebe (7,8,9) verbunden ist.

Zur Herstellung von regelmäßigen Mehrkantflächen ist ein gerades Übersetzungsverhältnis, vorzugsweise von 1 : 2, erforderlich, wobei die Anzahl der Werkzeugschneiden halb so groß ist wie die Anzahl der herzustellenden Einzel-Kantflächen. Zur Herstellung von ungeraden Mehrkantflächen ist ein entsprechendes, insbesondere in Anspruch 3 angegebenes, ungerades Übersetzungsverhältnis bei einer Schneide erforderlich.

Die Einzelteile des Zusatzgerätes können einfach montiert werden. Der Messerkopf wird an der Spindel befestigt. Der Werkstückträger wird durch Pratzen oder Schrauben auf dem Maschinentisch bzw. auf dem entsprechenden Teil der Drehmaschine befestigt. Die Verbindung zwischen Spindel und drehbar gelagertem Werkstückträger erfolgt durch die Gelenkwelle, die sich in ihrer Länge der jeweiligen Winkelstellung anpaßt. Hierdurch ist eine beliebige und freie Positionierung des Werkzeuges zum Werkstück möglich (Zustellung und Arbeitshub). Die Arbeitsbewegung kann in drei verschiedenen Achsrichtungen vorgenommen werden und zwar wie folgt:

1. Axial zur Werkstückdrehachse (Kantenmaß ist eingestellt).

2. Radial zur Werkstückdrehachse bis zum Erreichen des Kantenmaßes.

3. Tangential zur Werkstückdrehachse (Kantenmaß ist eingestellt).

Das Getriebe ist vorteilhafterweise ein Zahnriementrieb, der für eine form- und kraftschlüssige Übertragung in dem gewünschten Übersetzungsverhältnis sorgt.

Im folgenden wird die Erfindung unter Hinweis auf die Zeichnung anhand zweier Ausführungsbeispiele näher erläutert.

Es zeigt:

Fig. 1 eine schematische Seitenansicht einer Fräsmaschine mit einem Zusatzgerät nach der Erfindung; und

Fig. 2 eine entsprechende schematische Draufsicht einer Drehmaschine mit einem Zusatzgerät nach der Erfindung.

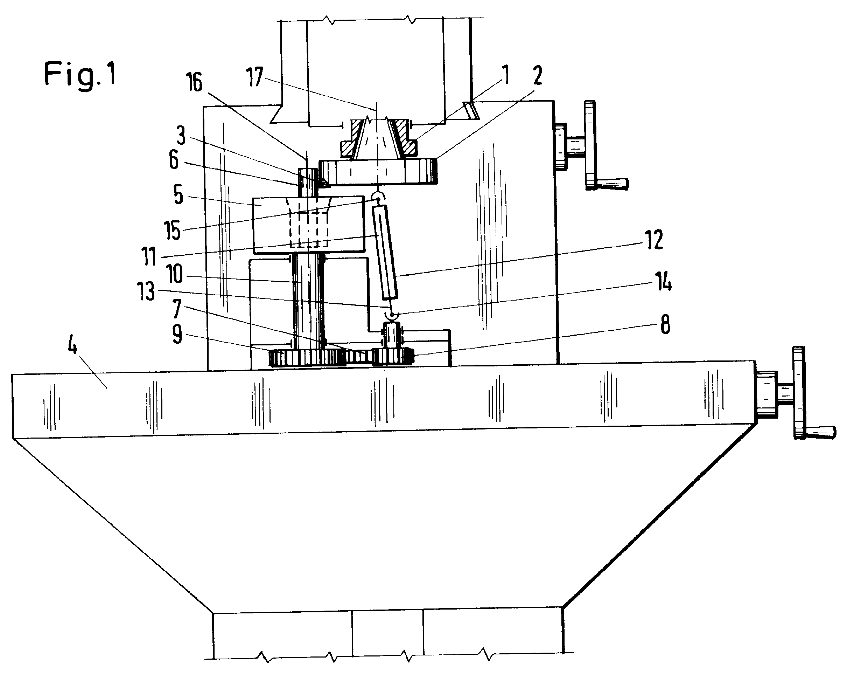

In den beiden Ausführungsformen sind gleiche Teile mit gleichen Bezugzeichen bezeichnet. Bei der Ausführungsform nach Fig. 1 ist das Zusatzgerät mit Hilfe nicht gezeigter Schrauben oder Pratzen auf einem Maschinentisch 4 befestigt.

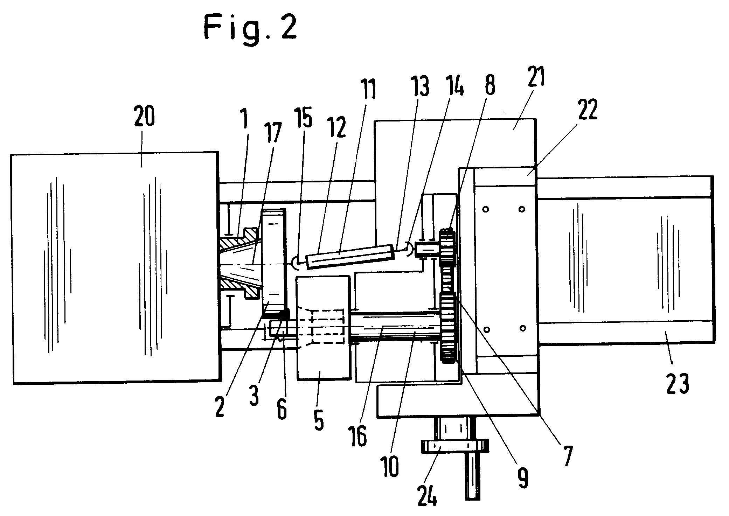

Bei der Ausführungsform nach Fig. 2 ist der Maschinentisch durch den Quersupport 21 mit Aufspannwinkel 22, Führungsbett 23, ersetzt. Die Kurbel für den Quersupport 21 ist mit 24 bezeichnet. Bei der Drehmaschine nach Fig. 2 ist noch ein Spindelstock 20 dargestellt.

Bei beiden Ausführungsformen ist die Spindel 1 erkennbar, die bei der Ausführungsform nach Fig. 1 eine Frässpindel ist. An der Spindel 1 ist ein Messerkopf 2 befestigt. Der Messerkopf trägt mindestens ein Werkzeug 3 mit einer entsprechend ausgebildeten Schneide. Je nach Anzahl der Werkzeuge entstehen bei einem geraden Übersetzungsverhältnis zwei, vier, sechs, acht usw. Kantflächen. Der Messerkopf kann in üblicher Weise an der Spindel 1 befestigt werden. Weiterhin ist an dem Messerkopf 2 die Gelenkwelle 11 befestigt. Durch die beiden Gelenke 14 und 15 kann der Werkstückträger 5 mit dem Getriebe 7 bis 9 in einer beliebigen Position befestigt werden. Es ist eine seitliche und eine abstandsverändernde Relativbewegung zwischen Spindel 1 und Werkstückträger 5 möglich. Gleichzeitig gleiten die beiden Teile 12 und 13 der Gelenkwelle 11 in Längsrichtung ineinander, so daß sich die Gelenkwelle in ihrer Länge der jeweiligen Stellung der beiden zueinander verschiebbaren Teile (Spindel einerseits und Werkstückträger andererseits) anpaßt.

Das schlupffreie Getriebe besteht aus zwei Zahnrädern 8 und 9 sowie einem Zahnriemen 7, der um die Zahnräder mit entsprechenden Durchmessern umläuft. Der Werkstückträger 5 trägt das Werkstück 6. Er ist mit Hilfe einer das Zahnrad 9 tragenden Welle 10, deren Drehachse mit 16 bezeichnet ist, drehbar gelagert. Die Spindelachse der Spindel 1 ist mit 17 bezeichnet.

Es ist leicht erkennbar, daß eine herkömmliche Fräsmaschine schnell und einfach umgerüstet werden kann, wenn das Zusatzgerät vorhanden ist. Hierzu wird der Werkstückträger 5 mit dem Getriebe auf dem Maschinentisch 4 oder dem entsprechenden Teil der Drehmaschine befestigt. Über die Gelenkwelle 11 wird die Verbindung zur Spindel 1 hergestellt, so daß der synchrone Umlauf von Messerkopf und Werkstückträger sichergestellt ist. Während des Betriebes dürfen sich die Umlaufverhältnisse nicht ändern.

Durch die Erfindung sind in Abhängigkeit von der Anzahl der Schneiden und dem Übersetzungsverhältnis die unterschiedlichsten Mehrkantflächen herstellbar. Wenn ein gerades Übersetzungsverhältnis von 1 : 2 gewählt wird, entsteht bei einer Schneide ein Zweikant, bei zwei Schneiden ein Vierkant, bei drei Schneiden ein Sechskant, bei vier Schneiden ein Achtkant usw.. Durch entsprechende Sonderwerkzeuge lassen sich auch Schlitze herstellen, wobei wiederum bei einem Übersetzungsverhältnis von 1 : 2 bei einem Werkzeug ein Schlitz, bei zwei Werkzeugen zwei Schlitze usw. entstehen. Wiederum durch Sonderwerkzeuge und entsprechende Einstellungen, lassen sich auch einfache Anflächungen, Rechtecke, Rhomben und rhombusförmige Schlitze herstellen.

Unregelmäßige Kantflächen entstehen durch bestimmte ungerade Übersetzungsverhältnisse. Ein Dreikant entsteht bei einem Übersetzungsverhältnis von 1 : 3 oder 1 : 1,5; ein Fünfkant bei einem Übersetzungsverhältnis von 1 : 2,5 oder 1 : 1,25. Ein Siebenkant entsteht bei einem Übersetzungsverhältnis von 1 : 3,5 oder 1 : 1,75. Diese Reihe läßt sich entsprechend fortsetzen. Die Schneidenzahl ist hierbei grundsätzlich eins. Wenn eine zweite Schneide verwendet wird, bearbeiten beide Schneiden die gleiche Fläche, d.h. die erste Schneide schneidet vor und die zweite Schneide schneidet fertig.

Je nach Übersetzungsverhältnis sind die hergestellten Kantflächen mehr oder weniger ballig.

**Patentansprüche**

1. Zusatzgerät für Werkzeugmaschinen, wie Dreh-, Fräsmaschinen oder dergleichen, zum Herstellen von Mehrkantflächen an Werkstücken, gekennzeichnet durch folgende Merkmale:

a) einen an der Spindel (1) der Werkzeugmaschine form- und kraftschlüssig drehantreibbar befestigbaren Messerkopf (2) mit einer oder mehreren in gleichen Teilungsabständen angeordneten Schneiden (3),

b) eine an dem Messerkopf (2) form- und kraftschlüssig drehantreibbar befestigbare, längenveränderbare Gelenkwelle (11),

c) einen auf dem Maschinentisch oder dergleichen befestigbaren Werkstückträger (5) mit parallel zur Spindelachse (17) verlaufender Drehachse (16), der mit dem freien Ende der Gelenkwelle (11) über ein schlupffreies, gleichsinniges und ein bestimmtes Übersetzungsverhältnis aufweisendes Getriebe (7,9) verbunden ist.

2. Zusatzgerät nach Anspruch 1, dadurch gekennzeichnet, daß das Übersetzungsverhältnis des Getriebes (7, 8, 9) zur Herstellung von regelmäßigen Mehrkantflächen ein gerades, vorzugsweise 1 : 2 ist.

3. Zusatzgerät nach Anspruch 1, dadurch gekennzeichnet, daß zur Herstellung von unregelmäßigen Mehrkantflächen das Übersetzungsverhältnis des Getriebes (7, 8, 9) für ein 3-Kant 1 : 3 oder 1 : 1,5, für ein 5-Kant 1 : 2,5 oder 1 : 1,25, für ein 7-Kant 1 : 3,5 oder 1 : 1,75 usw. ist.

4. Zusatzgerät nach Anspruch 2, dadurch gekennzeichnet, daß die Anzahl der Schneiden (3) halb so groß ist wie die Anzahl der herzustellenden Einzel-Kantflächen, d.h. zur Herstellung eines 2-Kantes eine Schneide, zur Herstellung eines 4-Kantes zwei Schneiden, zur Herstellung eines 6-Kantes drei Schneiden usw., vorgesehen sind.

5. Zusatzgerät nach Anspruch 3, dadurch gekennzeichnet, daß zwei Schneiden vorgesehen sind, von denen eine vor- und die andere fertigschneidet.

## Revendications

1. Accessoire pour machines-outils, telles que des tours, des fraiseuses ou analogues, pour la fabrication de surfaces polygonales sur des pièces, caractérisé par les points suivants :

a) une tête porte-lames (2) pouvant être fixée sur la broche (1) de la machine-outil de manière à pouvoir être entraînée en rotation par complémentarité de formes et par frottememt et comportant une ou plusieurs lames (3) disposées à distances égales,

b) un arbre articulé (11) modifiable en longueur et pouvant être fixé sur la tête porte-lames (2) de manière à pouvoir être entraîné en rotation par complémentarité de formes et par frottement,

c) un porte-pièce (5) qui peut être fixé sur la table de machine-outil ou analogue, comporte un axe de rotation (16) s'étendant parallèlement à l'axe de broche (17) et est relié à l'extrémité libre de l'arbre articulé (11) par une transmission (7, 8, 9) exempte de glissement, de même sens et présentant un certain rapport de transmission.

2. Accessoire selon la revendication 1, caractérisé en ce que le rapport de la transmission (7, 8, 9) pour la fabrication de surfaces polygonales régulières est un rapport pair, de préférence de 1 : 2.

3. Accessoire selon la revendication 1, caractérisé en ce que pour réaliser des surfaces polygonales irrégulières, le rapport de la transmission (7, 8, 9) est pour une surface à trois côtés de 1 : 3 ou de 1 : 1,5, pour une surface à 5 côtés de 1 : 2,5 ou de 1 : 1,25, pour une surface à 7 côtés de 1 : 3,5 ou de 1 : 1,75, etc..

4. Accessoire selon la revendication 2, caractérisé en ce que le nombre des lames est inférieur de moitié à celui des différentes surfaces à côtés à réaliser, c'est-à-dire une lame pour réaliser une surface à deux côtés, deux lames pour réaliser une surface à 4 côtés, trois lames pour réaliser une surface à 6 côtés, etc..

5. Accessoire selon la revendication 3, caractérisé en ce qu'il est prévu deux lames dont l'une dégrossit et l'autre effectue le finissage.

## Claims

1. Attachment for machine tools, such as milling machines, lathes, etc, for producing polygonal faces on workpieces, cbaracterized by the following features:

a) a rotary drivable, fixable cutter head (2) positively and non-positively connected to the spindle (1) of the machine tool and having one or more cutting edges arranged with the same indexing spacings (3),

b) a rotary drivable, fixable, length-variable universal shaft (11) positively and non-positively connectable to the cutter head (2),

c) a work carrier (5) fixable to the machine table or the like with a rotation axis (16) parallel to the spindle axis (17) and which is connected to the free end of the universal shaft (11) by means of a non-slip, equidirectional gear (7,9) having a specific transmission ratio.

2. Attachment according to claim 1, characterized in that the transmission ratio of the gear (7,8,9) for producing regular polygonal faces is even and preferably 1:2.

3. Attachment according to claim 1, characterized in that for producing irregular polygonal faces, the transmission ratio of the gear (7,8,9) for a trihedron is 1:3 or 1:1.5, for a pentagon 1:2.5 or 1:1.25, for a heptagon 1:3.5 or 1:1.75, etc.

4. Attachment according to claim 2, characterized in that the number of cutting edges (3) is half as large as the number of individual edge faces to be produced, i.e. one cutting edge for producing a 2-sided figure, two cutting edges for producing a square, three cutting edges for producing a hexagon, etc.

5. Attachment according to claim 3, characterized in that two cutting edges are provided, one being responsible for the precutting and the other for the finished cutting.

Fig.1

# Fig. 2

EP 0 355 332 B1